(19) Europäisches Patentamt
European Patent Office
Office européen des brevets

(11) **EP 4 513 157 B1**

(12) **EUROPEAN PATENT SPECIFICATION**

(45) Date of publication and mention
of the grant of the patent:
**25.03.2026 Bulletin 2026/13**

(21) Application number: **24189031.8**

(22) Date of filing: **16.07.2024**

(51) International Patent Classification (IPC):
***G01L 9/00*** *(2006.01)*     ***G01P 15/097*** *(2006.01)*
***G01P 15/13*** *(2006.01)*

(52) Cooperative Patent Classification (CPC):
**G01L 9/001**

(54) **GAS PRESSURE SENSOR**

GASDRUCKSENSOR

CAPTEUR DE PRESSION DE GAZ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.08.2023 JP 2023135618**

(43) Date of publication of application:
**26.02.2025 Bulletin 2025/09**

(73) Proprietor: **Japan Aviation Electronics Industry, Limited**
**Tokyo 150-0043 (JP)**

(72) Inventors:
  • **TAKAGI, Masato**
    **Tokyo, 150-0043 (JP)**
  • **MATSUO, Kosuke**
    **Tokyo, 150-0043 (JP)**
  • **TAKAHASHI, Hiroyuki**
    **Tokyo, 150-0043 (JP)**
  • **TANAKA, Atsushi**
    **Tokyo, 150-0043 (JP)**

(74) Representative: **MERH-IP Matias Erny Reichl Hoffmann**
**Patentanwälte PartG mbB**
**Paul-Heyse-Straße 29**
**80336 München (DE)**

(56) References cited:
**EP-A2- 1 353 186**     **CN-A- 111 595 511**
**US-B2- 8 256 298**     **US-B2- 9 915 576**

  • **STEMME E ET AL: "A CAPACITIVELY EXCITED AND DETECTED RESONANT PRESSURE SENSOR WITH TEMPERATURE COMPENSATION", SENSORS AND ACTUATORS A: PHYSICAL, ELSEVIER BV, NL, vol. A32, no. 1 / 03, 1 April 1992 (1992-04-01), pages 639 - 647, XP000287385, ISSN: 0924-4247, DOI: 10.1016/ 0924-4247(92)80057-A**

EP 4 513 157 B1

**Description**

TECHNICAL FIELD

The present disclosure generally relates to a gas pressure sensor.

BACKGROUND ART

Previously known methods for measuring a gas pressure include a method that detects a gas pressure itself, a method that uses the dependency of other physical quantity (for example, an amount of heat transport) on the gas pressure, a method that uses ionization of gas, and the like. With respect to detecting a gas pressure itself, a gas pressure sensor with a membrane is well known so far. The gas pressure sensor with a membrane measures a gas pressure from an amount of elastic displacement of the membrane caused by the gas pressure. Recently, as a type of gas pressure sensor with a membrane, a gas pressure sensor has been developed which measures a gas pressure using squeeze-film damping phenomenon (see Aurélien Dantan, "Membrane sandwich squeeze film pressure sensors," Journal of Applied Physics, 128, 091101 (2020); https://doi.org/10.1063/5.0011795 (hereinafter referred to as Non-Patent Literature 1)). The squeeze-film damping phenomenon will be briefly explained. Fluid present in a void zone between a fixed flat plate and a movable flat plate, these two flat plates being brought closer to each other to have a distance of several to several tens of micrometers therebetween, behaves like viscous fluid when the fluid moves along facing surfaces of the fixed flat plate and the movable flat plate with motion of the movable flat plate. The viscous-fluid-like behavior of the fluid produces resistance force against motion of the movable flat plate. This phenomenon is called "squeeze-film damping phenomenon".
Prior art relating to or similar to those described as background art is known from, for example, CN111595511A.
The patent application No. CN111595511A in China relates to a full-range vacuum gauge including a sensing module, a control module, and a data processing module. The sensing module includes multiple sensing units of different sizes. Under the drive of different test modes output by the control module, the sensing units include multiple test modes. Based on the multiple test modes and multiple sensing units of different sizes, the frequency response method and frequency drift method are respectively employed to measure the test intervals for low vacuum and medium vacuum, while the attenuation method and PID control method are used to measure the test interval for high vacuum. The data processing module continuously collects the output parameters of the sensing units under different test modes and calculates the actual pressure value of the test environment based on the output parameters.

BRIEF SUMMARY OF THE INVENTION

As described above, a gas pressure sensor with a membrane generally measures a gas pressure from an amount of elastic displacement of the membrane caused by the gas pressure. We disclose a gas pressure sensor which measures a gas pressure from a physical quantity different from an amount of elastic displacement.
Technical matters described herein are neither intended to explicitly or implicitly limit inventions as claimed nor intended to allow any person other than those benefiting from the present invention (for example, the applicant and proprietors) to limit the inventions as claimed, and are merely provided to facilitate understanding of the gist of the present disclosure. The outline of the present disclosure from another viewpoint can be appreciated, for example, from the claims at the time of filing of this patent application.
A gas pressure sensor to be disclosed includes a squeeze-film damping structure and a computing device. The squeeze-film damping structure includes a first object, and a second object capable of moving relative to the first object. A squeeze-film damping phenomenon occurs between the first object and the second object. The computing device calculates an ambient pressure of the squeeze-film damping structure from a thermal noise generated in the second object by the squeeze-film damping phenomenon.
These and other objects, features and advantages of the present disclosure will become apparent from the detailed description taken in conjunction with the accompanying drawings.

EFFECTS OF THE INVENTION

A gas pressure sensor according to the present disclosure can measure a gas pressure from a thermal noise in a second object capable of moving relative to a first object.

BRIEF DESCRIPTION OF THE DRAWINGS

The subject matter, which is regarded as the invention, is particularly pointed out and distinctly claimed in the claims at the conclusion of the specification. The present disclosure itself, and manner in which it may be made or used, if any, may be better understood after a review of the following description in connection with the accompanying drawings in which:

FIG. 1 shows a relationship between a gas pressure P and a condition under which the Reynolds equation holds in the squeeze-film damping phenomenon.

FIG. 2 shows a structure of a gas pressure sensor, in which FIG. 2(a) is a sectional view, and FIG. 2(b) is a partially enlarged view.

FIG. 3 shows a functional configuration of the gas pressure sensor.

FIG. 4 shows a result of a demonstration experiment.

FIG. 5 shows a functional configuration of a gas pressure sensor.

LIST OF REFERENCE NUMERALS

With regard to reference numerals used, the following numbering is used throughout the drawings.

1: housing
2: flexure
3: permanent magnet
4: electrode support
4a: base
4b: leg
4c: leg
4d: electrode
4e: electrode
8: squeeze-film damping structure
10: pendulum
10a: electrode
10b: electrode
30: displacement detector
31: oscillation circuit
32: detector
33: demodulator
50: current output amplifier
60: torque coil
80: readout resistor
90: computing device
100: gas pressure sensor
200: gas pressure sensor

DETAILED DESCRIPTION

Before describing an embodiment of a gas pressure sensor according to the present disclosure, a principle of the gas pressure sensor according to the present disclosure will be described.
The gas pressure sensor according to the present disclosure includes a squeeze-film damping structure. The squeeze-film damping structure includes a first object, and a second object capable of moving relative to the first object. In general, each of the first object and the second object has a flat surface, and the first object and the second object are brought closer to each other to have a distance of several to several tens of micrometers in a state where the flat surface of the first object and the flat surface of the second object face each other. A thermal noise f (unit: N/√Hz) produced in the second object by the squeeze-film damping phenomenon is represented by Formula (1) (see T. B. Gabrielson, "Mechanical-thermal noise in micromachined acoustic and vibration sensors," IEEE Transactions on Electron Devices, vol. 40, no. 5, pp. 903-909, May 1993, doi: 10.1109/16.210197 (hereinafter referred to as Reference Literature 1)). In Formula (1), $k_B$ is the Boltzmann constant ($k_B$ = 1.380649×10$^{-23}$ [J/K]), T is an ambient temperature (unit: K) of the squeeze-film damping structure (that is, a temperature of an environment in which the squeeze-film damping structure is placed), and $C_{SFD}$ is an attenuation coefficient (unit: N·s/m).

$$f = \sqrt{4k_B T C_{SFD}} \tag{1}$$

The attenuation coefficient $C_{SFD}$ is represented by Formula (2) (see Reference Literature 1). In Formula (2), $\mu$ is a coefficient of viscosity (unit: N·s/m$^2$) of gas present in a void zone between the first object and the second object in the squeeze-film damping structure, h is a distance (unit: m) between the first object and the second object, and S is a facing area (unit: m$^2$) of the first object and the second object (that is, an area of a portion facing the second object (resp. the first object) of a surface of the first object (resp. the second object)).

$$C_{SFD} = \frac{3\mu S^2}{2\pi h^3} \tag{2}$$

The coefficient $\mu$ of viscosity is represented by Formula (3) (see T. Veijola et al., "Equivalent-circuit model of the squeezed gas film in a silicon accelerometer," Sensors and Actuators A: Physical, 48 (1995), 239-248). In Formula (3), $\mu_{AAP}$ is a coefficient of viscosity (unit: N·s/m$^2$) of the atmosphere at normal temperature and normal pressure, and $K_n$ is the Knudsen number.

$$\mu = \frac{\mu_{AAP}}{1 + 9.638 K_n^{1.159}} \tag{3}$$

The Knudsen number $K_n$ is represented by Formula (4) (see Non-Patent Literature 1). In Formula (4), $\lambda$ is a mean free path (unit: m), H is a representative length (unit: m), d is a diameter of a gas molecule (unit: m), and P is an ambient pressure (unit: N/m$^2$) of the squeeze-film damping structure (that is, a gas pressure of the environment in which the squeeze-film damping structure is placed). As the representative length H, the distance h between the first object and the second object is adopted.

$$K_n = \frac{\lambda}{H} = \frac{k_B T}{\sqrt{2}\pi d^2 h P} \tag{4}$$

Thus, Formula (5) holds between the thermal noise f and the gas pressure P. It is apparent from the relational expression that the gas pressure P can be measured by detecting the thermal noise f.

$$f = \sqrt{4k_B T \cdot \frac{3S^2}{2\pi h^3} \cdot \frac{\mu_{AAP}}{1 + 9.638\left(\dfrac{k_B T}{\sqrt{2}\pi d^2 h P}\right)^{1.159}}} \tag{5}$$

In the squeeze-film damping phenomenon, a pressure distribution of flow of viscous fluid present in a sufficiently narrow void zone is represented by a Reynolds equation in which only the squeeze effect is taken into account (that is, the wedge effect and the stretch effect are ignored). The Reynolds equation in which only the squeeze effect is taken into account holds under the condition of Formula (6) (see J. B. Starr, "Squeeze-film damping in solid-state accelerometers," IEEE 4th Technical Digest on Solid-State Sensor and Actuator Workshop, Hilton Head, SC, USA, 1990, pp. 44-47, doi: 10.1109/SOLSEN.1990.109817). In Formula (6), $\omega$ is an oscillation frequency of the second object, $\rho$ is a fluid density, R is a molar gas constant, and M is a molar mass of a molecule.

$$\frac{\omega h^2 \rho}{\mu} \ll 1, \qquad \rho = \frac{PM}{RT} \tag{6}$$

From Formula (3) and Formula (4), Formula (6) is represented by Formula (7).

$$\Xi \equiv \frac{M\omega h^2}{RT\mu_{AAP}} \cdot P \cdot \left(1 + 9.638\left(\frac{k_B T}{\sqrt{2}\pi d^2 h P}\right)^{1.159}\right) \ll 1 \tag{7}$$

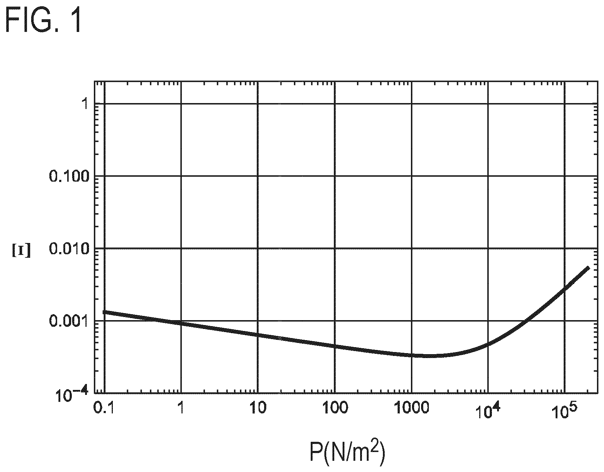

A relationship between $\Xi$ and P is shown in FIG. 1, using values of the parameters below that can be adopted in a configuration of a gas pressure sensor 100 according to an embodiment to be described later. As can be seen from FIG. 1, the gas pressure sensor 100 that adopts the values of the parameters below can measure a gas pressure within the range of approximately 10 to $10^5$ N/m$^2$. The parameters are merely examples. It is possible to determine the values of $\omega$ and h in accordance with a structure of the gas pressure sensor 100 and determine the values of M, T, and d in accordance with an environment in which the gas pressure sensor 100 is placed.

$$\omega = 2\pi \times 19 \text{ rad/s}$$

(a natural angular frequency of a pendulum 10) h = 17 $\mu$m (a distance between electrodes 4d and 4e and electrodes 10a and 10b)

$$R = 8.31 \text{ J/(K·mol)}$$

$$M = 2.8 \times 10^{-2} \text{ kg/mol}$$

(a molar mass of nitrogen)

$$\mu_{AAP} = 1.5 \times 10^{-5} \text{ N·s/m}^2$$

(a coefficient of viscosity of the atmosphere at normal temperature and normal pressure)

$$k_B = 1.38 \times 10^{23} \text{ J/K}$$

T = 300 K
d = 0.38 nm (a diameter of a nitrogen molecule)

<Embodiment>

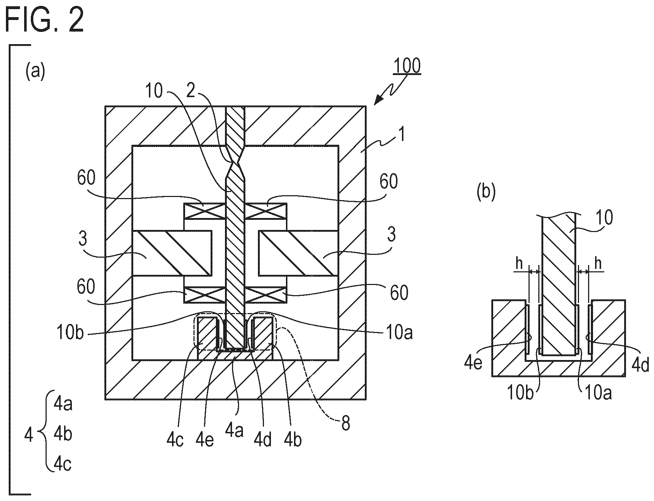

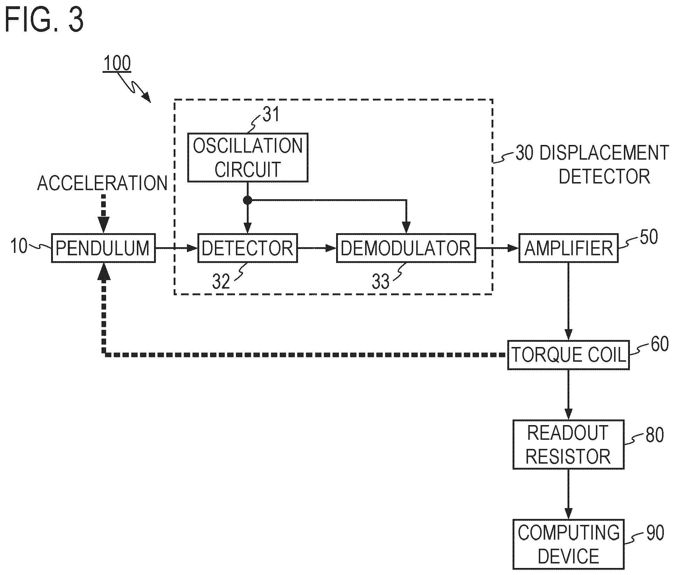

The gas pressure sensor 100 according to the embodiment has substantially the same structure as an accelerometer having a servo mechanism. As will be described later, a part of a configuration of an accelerometer having a servo mechanism is a squeeze-film damping structure. An accelerometer having a servo mechanism shown in FIGs. 2 and 3 is adopted for explanation of the embodiment, but is not limited thereto.

Referring to FIGs. 2 and 3, the configuration of the gas pressure sensor 100 will be outlined. The gas pressure sensor 100 includes a housing 1, the pendulum 10, a torque coil 60, a permanent magnet 3, an electrode support 4, a displacement detector 30, a current output amplifier 50, a readout resistor 80, and a computing device 90. The pendulum 10 is made of, for example, quartz and is shaped like a rectangular flat plate. The pendulum 10 has a fixed end at which the pendulum 10 is fixed to an inner wall of the housing 1. The pendulum 10 has a flexure 2 which is located at a portion near the fixed end of the pendulum 10. The flexure 2 has a constricted structure at which the pendulum 10 is formed to be thin. Thus, when the flexure 2 is elastically deformed, the pendulum 10 can swing like a cantilever. The pendulum 10 is located at a predetermined neutral position while an acceleration from the outside is not applied to the gas pressure sensor 100. The torque coil 60 is fixed to the pendulum 10. The pendulum 10 has a free end one surface of which the electrode 10a is fixed to, and the other surface of which the electrode 10b is fixed to.

The permanent magnet 3 is fixed to the inner wall of the housing 1, and a magnetic field is produced in a space around the permanent magnet 3. The torque coil 60 fixed to the pendulum 10 is located in the space in the magnetic field. The electrode support 4 is attached to an inner wall portion of the housing 1 which faces the free end of the pendulum 10. The electrode support 4 includes a base 4a, and two legs 4b and 4c which extend from two ends of the base 4a into the housing 1. The free end of the pendulum 10 is located in a void between the two legs 4b and 4c. The leg 4b has an inner surface to which the electrode 4d is fixed, and the leg 4c has an inner surface to which the electrode 4e is fixed. The electrode 4d faces the electrode 10a attached to the pendulum 10, and the electrode 4e faces the electrode 10b attached to the pendulum 10. The electrode 4d and the electrode 10a constitute a capacitor, and the electrode 4e and the electrode 10b constitute another capacitor.

When an input acceleration is applied from the outside to the gas pressure sensor 100, the pendulum 10 tries to stay at a current position by inertia, whereas the housing 1 is displaced under the effect of the input acceleration. With this displacement, a position of the pendulum 10 changes relative to the housing 1. Specifically, the pendulum 10 tilts with respect to the housing 1 due to elastic deformation of the flexure 2.

The displacement detector 30 detects a displacement of a position of the pendulum 10 relative to the housing 1 and outputs an electric signal corresponding to the displacement. In this example, the displacement detector 30 includes an oscillation circuit 31, a detector 32, and a demodulator 33. The oscillation circuit 31 generates an AC signal. The AC signal is supplied to the detector 32, which is, for example, a Wheatstone bridge circuit, and the demodulator 33. The detector 32 amplitude-modulates the AC signal on the basis of a difference between an electrostatic capacitance between the electrode 10a and the electrode 4d and an electrostatic capacitance between the electrode 10b and the electrode 4e. The modulated AC signal is sent to the demodulator 33. The demodulator 33 demodulates the modulated AC signal and outputs an electric signal corresponding to a displacement of the position of the pendulum 10 relative to the housing 1. For example, the magnitude of the displacement of the position of the pendulum 10 relative to the housing 1 is made to correspond to a voltage of the electric signal.

A voltage output from the demodulator 33 is input to the current output amplifier 50. An output current from the current output amplifier 50 flows through the torque coil 60. At this time, the torque coil 60 generates a force in a direction which cancels out a displacement of the position of the pendulum 10 relative to the housing 1 in relation to the magnetic field produced by the permanent magnet 3. The force acts on the pendulum 10. As described above, in the gas pressure sensor 100, a feedback control system (that is, a servo mechanism) is constructed which tries to keep the pendulum 10 at the predetermined neutral position. The current after having flowed through the torque coil 60 flows through the readout resistor 80.

Note that although an electrostatic capacitance detection method is adopted as a displacement detection method in the gas pressure sensor 100, the displacement detection method is not limited to this method. For example, a method that uses a light source, such as laser light or a light-emitting diode (LED), to detect the displacement of the pendulum 10 or a method that detects the displacement of the pendulum 10 using magnetism of a magnetoresistance-effect device or the like can also be adopted as the displacement detection method.

In the gas pressure sensor 100 described above, a squeeze-film damping structure 8 is composed of the pendulum 10 and the electrode support 4. The electrode support 4 corresponds to a first object, and the pendulum 10 corresponds to a second object. More particularly, the electrode 4d (resp. the electrode 4e) of the electrode support 4 can be regarded as the first object, and the electrode 10a (resp. the electrode 10b) of the pendulum 10 can be regarded as the second object.

Even when an artificial acceleration is not applied to the gas pressure sensor 100, collision of a gas molecule with the second object is occurring on a consistent basis, and therefore the second object swings constantly. This swing appears in a voltage across the readout resistor 80 as indicating a force acting on the pendulum 10, so the above-described thermal noise f can be calculated by subjecting the swing to frequency analysis. Specifically, in this example, the computing device 90 obtains a time series signal of an input acceleration from the voltage across the readout resistor 80 in a state where an artificial acceleration is not applied to the gas pressure sensor 100 (the process is a process to be executed by an accelerometer and is well known to those skilled in the art). The computing device 90 subsequently calculates a time series signal of a force acting on the pendulum 10 from an inertial mass and the time series signal of the input acceleration, and makes the time series signal of a force acting on the pendulum 10 subject to fast Fourier transform (FFT) analysis. The computing device 90 finally calculates a value of a gas pressure P using a thermal noise f obtained by the FFT analysis and the relational expression in Formula (5). The computing device 90 includes, but is not limited to, a processor and a memory, for example.

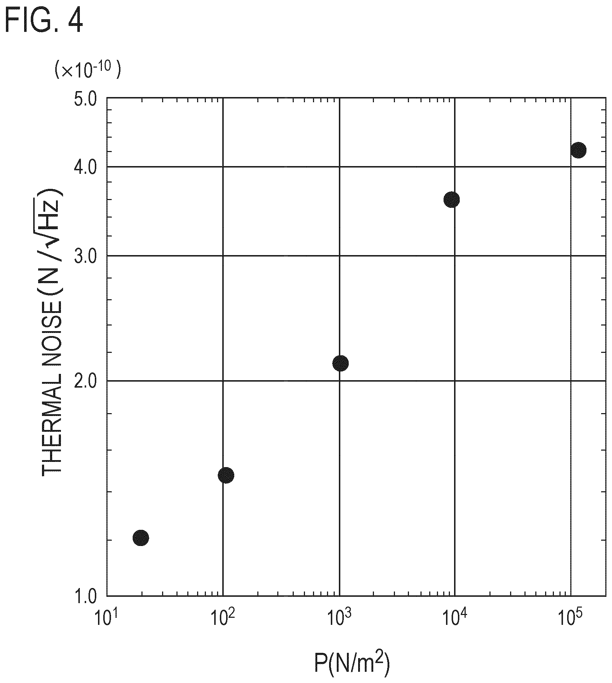

A result of a demonstrative experiment of the gas pressure sensor 100 is shown in FIG. 4. In the demonstrative experiment, a servo-type accelerometer which is a product of Japan Aviation Electronics Industry, Limited was used as the gas pressure sensor 100. Values of parameters for the servo-type accelerometer used for the demonstrative experiment are as described above. A Pirani gauge was used for measurement of a gas pressure value. As can be seen from FIG. 4, gas pressure values which were calculated from thermal noises measured by the gas pressure sensor 100 are almost consistent with gas pressure values measured by the Pirani gauge. The usefulness of the gas pressure sensor 100 has been demonstrated.

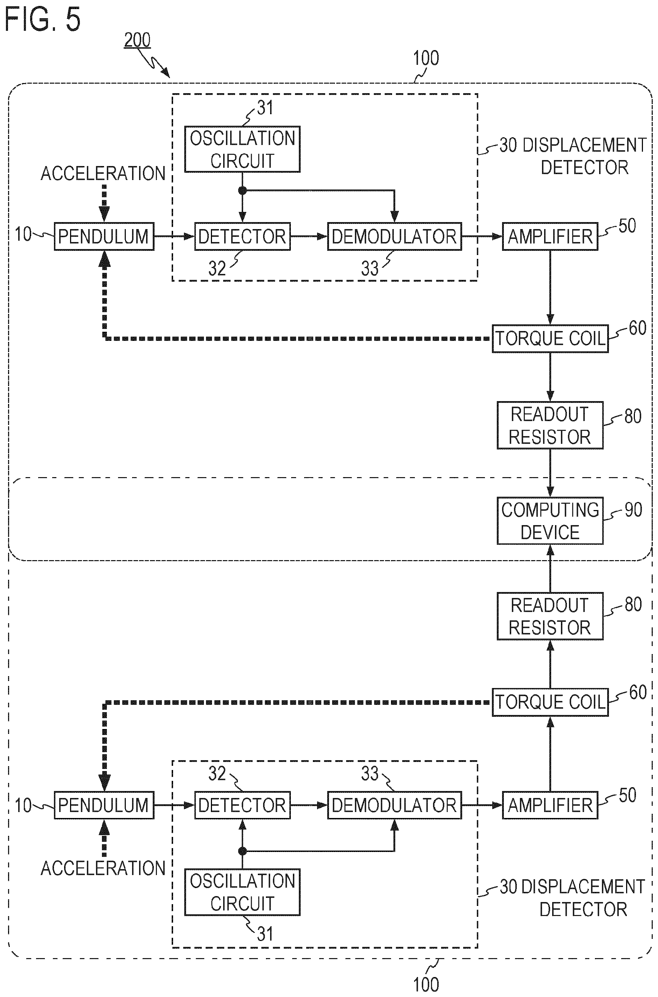

In the squeeze-film damping structure 8, a thermal noise derives from collision of a gas molecule with the second object. Thus, the amplitude of a displacement of the second object is minute. That is, if an acceleration is applied to the gas pressure sensor 100, detection of a thermal noise is difficult. A gas pressure sensor 200 having a configuration shown in FIG. 5 may be adopted to detect a thermal noise even in the presence of a disturbance acceleration. The gas pressure sensor 200 includes two accelerometers which are placed in the same environment. The gas pressure sensor 200 has a configuration in which the two accelerometers having the same structures as the gas pressure sensor 100 share one computing device 90.

In the gas pressure sensor 200, the computing device 90 uses a time series signal $a_1(t)$ of an acceleration measured by one accelerometer (the acceleration includes a disturbance acceleration and an acceleration deriving from collision of a gas molecule with a second object included in the one accelerometer) and a time series signal $a_2(t)$ of an acceleration measured by the other accelerometer (the acceleration includes the disturbance acceleration and an acceleration deriving from collision of a gas molecule with a second object included in the other accelerometer) to make a common-mode cancellation of the disturbance acceleration. Specifically, in a case in which the two accelerometers are arranged such that the disturbance acceleration applies to both of the two accelerometers with the same polarity, a common-mode cancellation of the disturbance acceleration is made by calculating a difference $a_1(t)-a_2(t)$ between the time series signal $a_1(t)$ of the acceleration measured by the one accelerometer and the time series signal $a_2(t)$ of the acceleration measured by the other accelerometer. In a case in which the two accelerometers are arranged such that the disturbance acceleration applies to both of the two accelerometers with a mutually opposite polarity, a common-mode cancellation of the disturbance acceleration is made by calculating the sum $a_1(t)+a_2(t)$ of the time series signal $a_1(t)$ of the acceleration measured by the one accelerometer and the time series signal $a_2(t)$ of the acceleration measured by the other accelerometer. The time series signal $a_1(t)-a_2(t)$ or $a_1(t)+a_2(t)$ obtained by the common-mode cancellation is the square root $\mathrm{sqrt}((f_1(t))^2+(f_2(t))^2)$ of sum of squares of a time series signal $f_1(t)$ of the acceleration deriving from collision of a gas molecule with the second object included in the one accelerometer and a time series signal $f_2(t)$ of the acceleration deriving from collision of a gas molecule with the second object included in the other accelerometer. The computing device 90 subjects, to FFT analysis, a time series signal of a force acting on the pendulum 10 which is calculated from an inertia mass and the time series signal ($= \mathrm{sqrt}((f_1(t))^2+(f_2(t))^2)$) obtained by the common-mode cancellation, and subsequently calculates a gas pressure P of the environment, in which the two accelerometers are placed, by regarding a thermal noise obtained by the FFT analysis as f in Formula (5). In summary, the computing device 90 calculates a thermal noise generated in both of the second object included in the one accelerometer and the second object included in the other accelerometer by making a common-mode cancellation of displacement (resp. velocity) caused by a common disturbance from a displacement (resp. a velocity) of one second object and a displacement (resp. a velocity) of the other second object and subsequently calculates, from the calculated thermal noise, the gas pressure of the environment, in which the squeeze-film damping structure 8 included in the one accelerometer and the squeeze-film damping structure 8 included in the other accelerometer are placed.

In each of the gas pressure sensors 100 and 200 according to the embodiment, a measurable pressure range is easily changed by changing a structure parameter (for example, an interelectrode distance). Since a thermal expansion coefficient of quartz is very small, when the pendulum 10 is made of quartz, the interelectrode distance is less affected, and each of the gas pressure sensors 100 and 200 has favorable temperature independency.

The gas pressure sensor 100 according to the embodiment has, but is not limited to, substantially the same structure as an accelerometer having a servo mechanism. A gas pressure sensor according to the present disclosure is based on the finding (see Formula (5)) that a thermal noise and a gas pressure have a one-to-one correspondence via an analysis formula. Thus, an indispensable condition for the gas pressure sensor according to the present disclosure is that the gas pressure sensor includes: A) a squeeze-film damping structure which includes a first object and a second object capable of moving relative to the first object and in which a squeeze-film damping phenomenon occurs between the first object and the second object; and B) a computing device which calculates an ambient pressure of the squeeze-film damping structure from a thermal noise generated in the second object. It is not indispensable for the gas pressure sensor according to the present disclosure to have substantially the same structure as an accelerometer having a servo mechanism. The gas pressure sensor 100 according to the embodiment has a measuring instrument (that is, the displacement detector 30) which measures a displacement of the second object (that is, the pendulum 10), but the gas pressure sensor 100 is not limited to this. The gas pressure sensor 100 may have a measuring instrument which measures a velocity of the second object (that is, the pendulum 10). Displacement is obtained by integrating velocity.

<Addendum 1>

Technical features disclosed in the above-described various types of embodiments and the modifications thereof are not always mutually exclusive. A technical feature of a given embodiment or a modification thereof may be applied to a technical feature of another embodiment or a modification thereof as far as there is no contradiction from a technical viewpoint.

The claims at the time of filing of the present application do not always exhaustively claim all the inventions disclosed in this specification. In this respect, it shall not be understood or interpreted that the applicant of the present application waives, before the filing, the right to a patent for an invention not claimed at the time of the filing of the present application. The applicant of the present application reserves the right to a patent for an invention not claimed in the present application, the right to file a divisional application for the invention, the right to claim the invention by amendment, and all other rights as far as the law or the treaty of a country or a region which has accepted the filing of the present application allows. However, this shall not apply if the applicant of the present application explicitly and determinately indicates a contrary intention.

<Addendum 2>

While the present invention has been described with reference to the exemplary embodiment, it will be understood by those skilled in the art that various changes may be made and equivalents may be substituted for elements thereof. In addition, many modifications may be made to adapt a particular system, device, or component thereof to the teachings of the present invention. Therefore, it is intended that the present invention is not limited to the particular embodiment disclosed for carrying out this invention, but that the present invention will include all embodiments falling within the scope of the appended claims.

Moreover, the use of the terms "first", "second", and the like do not denote any order or importance, but rather the terms "first", "second", and the like are used to distinguish one element from another. The terminology used in the present specification is for the purpose of describing the embodiment and is not intended to limit the present invention. It will be further understood that the terms "comprise" and "include" and inflected forms thereof, when used in this specification and/or the appended claims, specify the presence of stated features, steps, operations, elements, and/or components, but do not preclude the presence or addition of one or more other features, steps, operations, elements, components, and/or groups thereof. The term "and/or", if any, includes any and all combinations of one or more of the associated listed items. In the claims and the specification, unless otherwise specified, "connect", "join", "couple", "interlock", or synonyms therefor and all the word forms thereof do not necessarily deny the presence of one or more intermediate elements between, for example, two elements "connected" or "joined" to each other or "interlocked" with each other. In the claims and the specification, the term "any", if any, is to be understood as a term synonymous with a universal quantifier $\forall$ unless otherwise specified. For example, the expression "for any X" has the same meaning as "for all X" or "for each X". Expressions like "at least one of A, B and C", "at least one of A, B or C", and "at least one of A, B and/or C", if any, mean freely choosing one member from a set P obtained by removing an empty set $\phi$ from a power set $2^S$ of a set S including all listed elements as members, unless otherwise denied. In this example, S = {A, B, C}, $2^S$ = {$\phi$, {A}, {B}, {C}, {A, B}, {A, C}, {B, C}, {A, B, C}}, and P = {{A}, {B}, {C}, {A, B}, {A, C}, {B, C}, {A, B, C}}. The example means that one member (for example, {A, C}) is freely chosen from the set P.

Unless otherwise defined, all terms (including technical and scientific terms) used in the present specification have the same meanings as commonly understood by those skilled in the art to which the present invention belongs. It will be further understood that terms, such as those defined in commonly used dictionaries, should be interpreted as having meanings that are consistent with their meanings in the context of the relevant art and the present disclosure and should not be interpreted in an idealized or overly formal sense unless expressly so defined herein.

In describing the present invention, it will be understood that a number of techniques and steps are disclosed. Each of these has individual benefit and each can also be used in combination with one or more, or in some cases all, of the other disclosed techniques. Accordingly, for the sake of clarity, the present specification will refrain from explaining every possible combination of the individual techniques or steps. Nevertheless, the specification and claims should be read with the understanding that such combinations are entirely within the scope of the present invention and the claims.

The corresponding structures, materials, acts, and equivalents of all means or steps plus function elements in the claims below, if any, are intended to include any structure, material, or act for performing the function in combination with other claimed elements.

Although the embodiment of the present invention has been described above, the present invention is not limited to the embodiment. Various modifications and variations may be made without departing from the gist of the present invention. The chosen and described embodiment is for illustrating the principles of the present invention and its practical application. The present invention is used in various embodiments and with various modifications or variations, and the various modifications or variations are tailored to suit an expected purpose. All such modifications and variations are intended to be included in the scope of the present invention as determined by the appended claims.

**Claims**

1.   A gas pressure sensor (100) comprising:

a squeeze-film damping structure (8) including a first object (4) and a second object (10) capable of moving relative to the first object (4), wherein a squeeze-film damping phenomenon occurs between the first object (4) and the second object (10); and
a computing device (90) to calculate an ambient pressure of the squeeze-film damping structure (8),
the gas pressure sensor (100) **characterised in that**
the computing device (90) calculates the ambient pressure from a thermal noise generated in the second object (10),
wherein the following relationship holds between the thermal noise and the ambient pressure:

$$f = \sqrt{4k_B T \cdot \frac{3S^2}{2\pi h^3} \cdot \frac{\mu_{\mathrm{AAP}}}{1 + 9.638\left(\frac{k_B T}{\sqrt{2}\pi d^2 h P}\right)^{1.159}}}$$

where f is the thermal noise, P is the ambient pressure, $k_B$ is the Boltzmann constant, T is an ambient temperature of the squeeze-film damping structure (8), S is a facing area of the first object (4) and the second object (10), h is a distance between the first object (4) and the second object (10), $\mu_{\mathrm{AAP}}$ is a coefficient of viscosity of the atmosphere at normal temperature and normal pressure, and d is a diameter of a gas molecule.

2. The gas pressure sensor (100) according to Claim 1 further comprising:

a measuring instrument (30) to measure a displacement or a velocity of the second object (10), wherein the computing device (90) calculates the thermal noise from the displacement or the velocity of the second object (10).

3. The gas pressure sensor (100) according to Claim 1, wherein the second object (10) is a cantilevered pendulum (10).

**Patentansprüche**

1. Gasdrucksensor (100) mit:

einer Quetschfilmdämpfungsstruktur (8) mit einem ersten Objekt (4) und einem zweiten Objekt (10), das sich relativ zu dem ersten Objekt (4) bewegen kann, wobei ein Quetschfilmdämpfungsphänomen zwischen dem ersten Objekt (4) und dem zweiten Objekt (10) auftritt; und
einer Berechnungsvorrichtung (90) zum Berechnen eines Umgebungsdrucks der Quetschfilmdämpfungsstruktur (8),
wobei der Gasdrucksensor (100) **dadurch gekennzeichnet ist, dass**
die Berechnungsvorrichtung (90) den Umgebungsdruck aus einem in dem zweiten Objekt (10) erzeugten thermischen Rauschen berechnet,
wobei die folgende Beziehung zwischen dem thermischen Rauschen und dem Umgebungsdruck gilt:

$$f = \sqrt{4k_B T \cdot \frac{3S^2}{2\pi h^3} \cdot \frac{\mu_{\mathrm{AAP}}}{1 + 9.638\left(\frac{k_B T}{\sqrt{2}\pi d^2 h P}\right)^{1.159}}}$$

wobei f das thermische Rauschen ist, P der Umgebungsdruck ist, $k_B$ die Boltzmann-Konstante ist, T eine Umgebungstemperatur der Quetschfilmdämpfungsstruktur (8) ist, S ein zugewandter Bereich des ersten Objekts (4) und des zweiten Objekts (10) ist, h ein Abstand zwischen dem ersten Objekt (4) und dem zweiten Objekt (10) ist, $\mu_{\mathrm{AAP}}$ ein Viskositätskoeffizient der Atmosphäre bei normaler Temperatur und normalem Druck ist und d ein Durchmesser eines Gasmoleküls ist.

2. Gasdrucksensor (100) nach Anspruch 1, ferner mit:

einem Messinstrument (30) zum Messen einer Verschiebung oder einer Geschwindigkeit des zweiten Objekts (10), wobei
die Berechnungsvorrichtung (90) das thermische Rauschen aus der Verschiebung oder der Geschwindigkeit des zweiten Objekts (10) berechnet.

3. Gasdrucksensor (100) nach Anspruch 1, wobei
das zweite Objekt (10) ein freitragendes Pendel (10) ist.

**Revendications**

1. Capteur de pression de gaz (100) comprenant :

   une structure d'amortissement de film d'écrasement (8) comprenant un premier objet (4) et un second objet (10) capable de se déplacer par rapport au premier objet (4), dans lequel un phénomène d'amortissement de film d'écrasement se produit entre le premier objet (4) et le second objet (10) ; et
   un dispositif de calcul (90) pour calculer une pression ambiante de la structure d'amortissement de film d'écrasement (8),
   le capteur de pression de gaz (100) étant **caractérisé en ce que**
   le dispositif de calcul (90) calcule la pression ambiante à partir d'un bruit thermique généré dans le second objet (10),
   dans lequel la relation suivante est maintenue entre le bruit thermique et la pression ambiante :

$$f = \sqrt{4k_B T \cdot \frac{3S^2}{2\pi h^3} \cdot \frac{\mu_{\mathrm{AAP}}}{1 + 9.638\left(\dfrac{k_B T}{\sqrt{2}\pi d^2 h P}\right)^{1.159}}}$$

   où f est le bruit thermique, P est la pression ambiante, $k_B$ est la constante de Boltzmann, T est une température ambiante de la structure d'amortissement de film d'écrasement (8), S est une zone en regard du premier objet (4) et du second objet (10), h est une distance entre le premier objet (4) et le second objet (10), $\mu_{\mathrm{AAP}}$ est un coefficient de viscosité de l'atmosphère à température normale et pression normale, et d est un diamètre d'une molécule de gaz.

2. Capteur de pression de gaz (100) selon la revendication 1, comprenant en outre :

   un instrument de mesure (30) pour mesurer un déplacement ou une vitesse du second objet (10), dans lequel le dispositif de calcul (90) calcule le bruit thermique à partir du déplacement ou de la vitesse du second objet (10).

3. Capteur de pression de gaz (100) selon la revendication 1, dans lequel le second objet (10) est un pendule en porte-à-faux (10).

FIG. 1

FIG. 2

(a)

(b)

# FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 111595511 A

### Non-patent literature cited in the description

- **AURÉLIEN DANTAN**. Membrane sandwich squeeze film pressure sensors. *Journal of Applied Physics*, 2020, vol. 128, 091101, https://doi.org/10.1063/5.0011795
- **T. B. GABRIELSON**. Mechanical-thermal noise in micromachined acoustic and vibration sensors. *IEEE Transactions on Electron Devices*, May 1993, vol. 40 (5), 903-909
- **VEIJOLA et al.** Equivalent-circuit model of the squeezed gas film in a silicon accelerometer. *Sensors and Actuators A: Physical*, 1995, vol. 48, 239-248
- **J. B. STARR**. Squeeze-film damping in solid-state accelerometers. *IEEE 4th Technical Digest on Solid-State Sensor and Actuator Workshop*, 1990, 44-47